# EUROPÄISCHE PATENTSCHRIFT

(11) **EP 1 199 530 B1**
(45) Veröffentlichungstag und Bekanntmachung des Hinweises auf die Patenterteilung: **27.09.2006**
(21) Anmeldenummer: 01123914.2
(22) Anmeldetag: 06.10.2001
(51) Int. Cl.: F24D 19/10

(54) **ECO-Knopf**
ECO-button
ECO-bouton

(30) Priorität: 16.10.2000 DE 10051249
(43) Veröffentlichungstag der Anmeldung: 24.04.2002
(73) Patentinhaber: WILO AG, 44263 Dortmund (DE)
(72) Erfinder: Wolff, Christian, 44149 Dortmund (DE)
(74) Vertreter: COHAUSZ DAWIDOWICZ HANNIG & SOZIEN

(56) Entgegenhaltungen:
- EP-A- 0 308 848
- WO-A-90/04136
- DE-A- 3 322 841
- GB-A- 2 301 423

## Beschreibung

Die vorliegende Erfindung betrifft eine in ihrer Leistung regelbare Pumpe, insbesondere Kreiselpumpe für das Heizungssystem eines Gebäudes, der über einen von außen zugänglichen Schalter mindestens zwei Leistungsstufen vorgebbar sind, wobei die Leistungsstufen in mindestens zwei verschiedenen von der Vorgabe der Leistungsstufen unabhängigen Betriebsmodi vörgebbar sind.

Eine Pumpe mit Leistungsschalter ist beispielsweise in der WO 90 04 136 A gezeigt.

Derartige Pumpen etablieren sich in jüngerer Zeit unter den Heizungspumpen. So sind beispielsweise Pumpen bekannt, denen einerseits verschiedene Förderhöhen vorgebbar sind und die sich andererseits nicht nur im Normalmodus sondern auch in einem ökonomischen Sparmodus betreiben lassen. Dieser Sparmodus kann insbesondere eine Nachtabsenkung realisieren, d. h., die Regelung der Pumpe erkennt an der Temperatur des Heizwassers, daß nicht länger die volle Leistung nötig ist und paßt ihre Leistung diesen neuen äußeren Gegebenheiten selbständig an.

Nachteilig an den bislang bekannten Pumpen ist, daß die verschiedenen Betriebsmodi nur vom Fachmann durch einen kleinen Eingriff in die Elektronik einstellbar sind. So muß zur Einstellung der Nachtabsenkung ein kleiner Schalter auf der im Elektronikgehäuse befindlichen Platine umgelegt werden. Dieser Eingriff wird allerdings nur auf Wunsch des Kunden vorgenommen. Da der Kunde meist nicht über die Möglichkeit der Wahl verschiedener Betriebsmodi aufgeklärt ist und wenn er aufgeklärt ist nicht recht um deren Bedeutung weiß, wird in der Praxis von der Wahl kein Gebrauch gemacht. Die Pumpe läuft somit immer im vorgegebenen weniger ökonomischen Normalbetrieb. Es sind auch Pumpen bekannt, bei denen der andere Betriebsmodus über einen weiteren am Elektronikgehäuse befindlichen Schalter vorgegeben wird. Ein solcher Schalter ist jedoch mit zusätzlichen Kosten und vorallem insofern mit konstruktivem Mehraufwand verbunden, als die Welle des Schalters gegen das Gehäuse abgedichtet werden muß.

Aufgabe der vorliegenden Erfindung ist es, eine zuverlässige Pumpe zu schaffen, die trotz geringer Kosten eine hohe Betriebssicherheit bietet und die auf einfache Weise vom Betreiber an verschiedene Gegebenheiten anzupassen ist.

Diese Aufgabe wird durch eine Pumpe mit den kennzeichnenden Merkmalen des Anspruch 1 gelöst.

Die wesentlichen Vorteile der Erfindung resultieren aus der Doppelfunktion des einen Schalters. So sind über diesen einen Schalter einerseits die verschiedenen Betriebsmodi der Pumpe einstellbar, wobei andererseits für jeden gewählten Modus verschiedene Leistungsstufen kontinuierlich oder in diskreten Stufen vorgebbar sind. Der eine Schalter ersetzt somit die bislang vorhandenen zwei Schalter. Da der Schalter von außen zugänglich ist, erschließt sich jedem Nutzer, also nicht nur dem Fachmann sondern auch dem Hausbewohner, die gesamte Funktionalität und damit alle Vorteile der Pumpe. Der Nutzer kommt nicht umhin, die verschiedenen Funktionen der Pumpe selber zu entdecken und wird in gewisser Weise gezwungen, diese auszuprobieren. Die Erfindung trägt somit dazu bei, die Besonderheiten der damit ausgerüsteten Pumpen zu betonen, so daß sich diese gut im Markt plazieren lassen. Der erfindungsgemäße Schalter erhöht die Attraktivität der Pumpe.

Die Erfindung trägt außerdem im doppelten Sinne zur Kostenersparnis bei. So werden einerseits zwei bislang vorhandene Schalter durch einen einzigen ersetzt, was ein Bauteil einspart. Andererseits besteht für den Nutzer der Reiz, die Pumpe optimal auf die besonderen Gegebenheiten einzustellen, um so Energie zu sparen. Im Vergleich zu zwei getrennten von außen zugänglichen Schaltern bietet der erfindungsgemäße Kombi-Schalter große bauliche Vorteile. Beispielsweise ist es nicht länger nötig, zwei im Gehäuse befindliche Schalter gegen eindringende Feuchtigkeit abzudichten. Die Abdichtung lediglich eines Schalters halbiert den baulichen Aufwand und mindert die Kosten.

Es ist besonders vorteilhaft, als wählbare Leistungsstufen verschiedene diskrete oder kontinuierlich abgestufte Förderhöhen vorzugeben. Anders als so "anonyme" Größen wie Drehzahl in Umdrehungen pro Minute oder Leistung in Watt weist eine Förderhöhe in Metern einen direkten Bezug zu den Verhältnissen im Heizungssystem auf und wird daher wegen vom Benutzer leichter akzeptiert.

Auch wenn verschiedene Ausführungsformen des erfindungsgemäßen Schalters denkbar sind, so ist es besonders vorteilhaft, diesen als Drehknopf auszubilden, der in Bezug zu einer Nullstellung einmal linksherum und einmal rechtsherum über jeweils einen Skalenbereich verdrehbar ist. Auf jedem der Skalenbereiche sind jeweils mehrere Leistungsstufen angezeigt und damit anwählbar. Dabei repräsentieren die beiden Skalenbereiche jeweils einen der beiden Betriebsmodi. Dabei können die Skalenbereiche je nach Anwendungsfall gleiche oder unterschiedliche Skalierungen aufweisen. Beispielsweise kann der Skalenbereich im Normalbetrieb mehr Leistungsstufen einschließen als in einem Sparbetrieb. Statt lediglich zweier verschiedener Betriebsmodi können durch einen solchen Drehknopf über eine Vollkreisdrehung auch drei oder mehr Modi auswählbar sein. Die Skalen sind dann entsprechend übersichtlich um den Knopf herum angeordnet.

In einer anderen Ausführungsform ist der Schalter ein Dreh-Druckknopf, mit dem einerseits durch Drehung die Leistungsstufen in dem einen Betriebsmodus und nach einem Eindrücken die Leistungsstufen in dem anderen Betriebsmodus vorgebbar sind. Dabei ist es vorteilhaft, den Dreh-Druckknopf so auszubilden, daß von außen eindeutig erkennbar ist, in welchem Modus die Pumpe sich gerade befindet.

Es bietet sich an, als verschiedene Betriebsmodi einen Normalbetrieb und einen ökonomischer Betrieb mit jeweils verschiedenen Leistungsstufen vorzugeben. Dieser Öko-Betrieb kann beispielsweise eine automatische Nachtabsenkung und/oder eine automatische Sommer-Winter Umstellung sein. Bei diesen Arten der Regelung wird die Temperatur des Heizwassers oder des Heizkessels gemessen und anhand der gemessenen Temperatur werden Rückschlüsse auf einen reduzierten Betrieb der Heizung gezogen. Bei einem reduzierten Betrieb des Heizkessels kann die Leistung der Pumpe ebenfalls abgesenkt werden, da eine geringere Wassermenge in den Heizkörpern ausreicht.

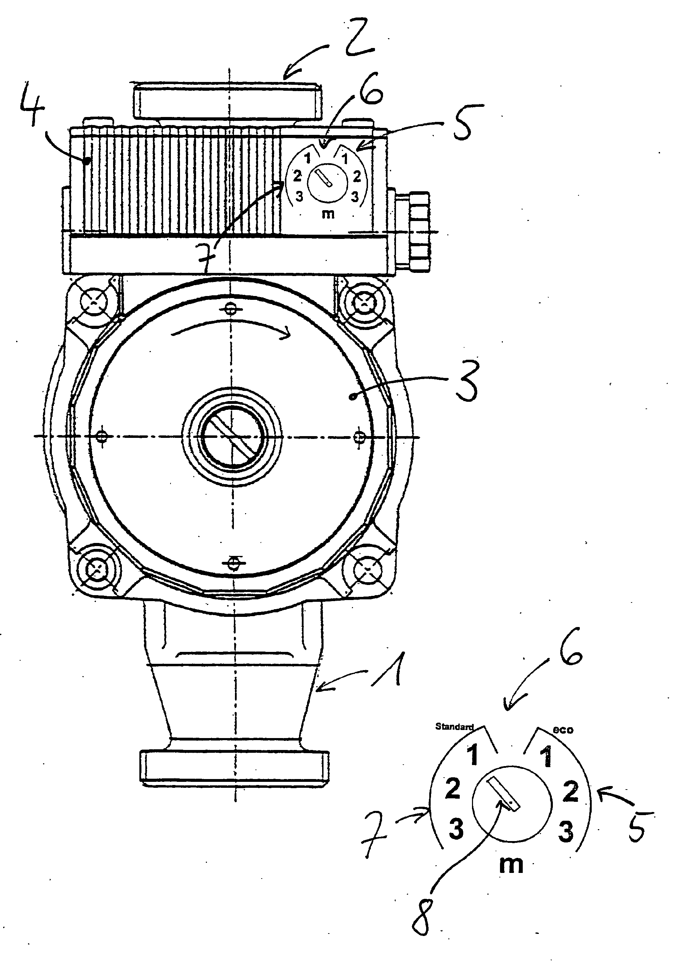

Eine Ausführungsform der Erfindung wird im folgenden anhand der Figur näher beschrieben.

Die Figur zeigt in rückwärtiger Ansicht eine ihrer Leistung regelbare Kreiselpumpe zum Bepumpen des Heizungssystems eines Gebäudes. Die Pumpe weist einen Saugstutzen 1 und einen Druckstutzen 2 auf. Zu erkennen ist die rückwärtige Stirnwand des Motorgehäuses 3, das den nicht dargestellten Stator umgibt. Auf dem Motorgehäuse 3 ist ein Elektronikgehäuse 4 aufgesetzt, das die Regel- und Leistungselektronik aufnimmt. An dem Elektronikgehäuse 4 ist ein von außen zugänglichen Schalter 6 angebracht, über den in diesem Fall drei Leistungsstufen vorgebbar sind.

Der Schalter 6 ist ein Drehknopf, der über zwei Skalenbereiche 5 und 7 (siehe Detailzeichnung) verdrehbar ist. Jeder der Skalenbereiche 5 und 7 repräsentiert einen Betriebsmodus, wobei der Bereich 5 einem "economic"-Betrieb entspricht und der Bereich 7 die Standard Einstellung ist. Jeder der Modi 5 und 7 läßt sich getrennt in drei Leistungsstufen über ein verschwenkbares Bedienelement 8 schalten. Mit dem Schalter 6 sind damit sowohl die Leistungsstufen als auch die Betriebsmodi schaltbar, wobei die Leistungsstufen in Metern (m) der Förderhöhe vorgebbar sind.

Der ECO Betrieb macht in diesem Falle eine Nachtabsenkung. Das bedeutet, daß über die Temperatur des Heizwassers festgestellt wird, ob der Heizkessel in einen kälteren Sparbetrieb umgeschaltet hat. Wird eine Absenkung festgestellt, regelt die Pumpe automatisch auf eine geringere Leistung. Wird hingegen ein Anstieg der Temperatur festgestellt, so wird dem Regler eine neue Führungsgröße vorgegeben.

## Patentansprüche

1. In ihrer Leistung regelbare Pumpe, insbesondere Kreiselpumpe, für das Heizungssystem eine Gebäudes, der über einen von außen zugänglichen Schalter (6) mindestens zwei Leistungsstufen vorgebbar sind, wobei die Leistungsstufen in mindestens zwei verschiedenen von der Vorgabe der Leistungsstufen unabhängigen Betriebsmodi vorgebbar sind,
**dadurch gekennzeichnet, daß** mit dem einen Schalter (6) sowohl die Leistungsstufen als auch die Betriebsmodi (5,7) schaltbar sind.

2. Pumpe nach Anspruch 1,
**dadurch gekennzeichnet, daß** eine Leistungsstufe einer vorgebbaren Förderhöhe entspricht.

3. Pumpe nach Anspruch 1,
**dadurch gekennzeichnet, daß** der Schalter (6) am Elektronikgehäuse (4) angebracht ist.

4. Pumpe nach einem der vorherigen Ansprüche,
**dadurch gekennzeichnet, daß** der Schalter (6) ein Drehknopf ist, der über zwei Skalenbereiche (5,7) verdrehbar ist, wobei der eine Skalenbereich (5) Leistungsstufen in dem einem Betriebsmodus und der andere Skalenbereich (7) Leistungsstufen in dem anderen Betriebsmodus einschließt.

5. Pumpe nach Anspruch 4,
**dadurch gekennzeichnet, daß** die Skalenbereiche unterschiedliche Skalierungen (5,7) aufweisen.

6. Pumpe nach einem der vorherigen Ansprüche,
**dadurch gekennzeichnet, daß** derSchalter (6) ein Dreh-Druckknopf ist, mit dem einerseits die Leistungsstufen im einen Betriebsmodus und nach Druckbeaufschlagung die Leistungsstufen im anderen Betriebsmodus vorgebbar sind.

7. Pumpe nach einem der vorherigen Ansprüche,
**dadurch gekennzeichnet, daß** der eine Modus der Normalbetrieb und der andere Modus ein ökonomischer Betrieb ist.

8. Pumpe nach Anspruch 7,
**dadurch gekennzeichnet, daß** die Regelung im ökonomischen Betrieb, wie insbesondere bei einer automatischen Nachtabsenkung und/oder einer automatischen Sommer/Winter Umstellung, die Temperatur des Heizwassers berücksichtigt.

## Claims

1. A pump with adjustable capacity, particularly a centrifugal pump for the heating system of a building, for which at least two power stages can be preset via a switch (6) accessible from the outside, in which the power stages can be preset to at least two different modes of operation that are independent of the setting of the power stages, **characterised in that** the power stages as well as the modes of operation (5, 7) can be switched with the single switch (6).

2. Pump according to claim 1,
**characterised in that** a power stage corresponds to a presettable delivery head.

3. Pump according to claim 1,
**characterised in that** the switch (6) is mounted on the electronics housing (4).

4. Pump according to one of the previous claims,
**characterised in that** the switch (6) is a rotary knob, which can be twisted through two scale ranges (5, 7), in which one scale range (5) encompasses power stages in one mode of operation and the other scale range (7) encompasses power stages in the other mode of operation.

5. Pump according to claim 4,
**characterised in that** the scale ranges have different scales (5, 7).

6. Pump according to one of the previous claims,
**characterised in that** the switch (6) is a rotary pushbutton, with which the power stages can be set to one mode of operation on the one hand and after the application of pressure with which the power stages can be set to the other mode operation.

7. Pump according to one of the previous claims
**characterised in that** one mode is normal operation and the other mode is economical operation.

8. Pump according to claim 7,
**characterised in that** the regulation in economical operation, as in the case of automatic night time temperature reduction and / or automatic summer / winter changeover in particular, takes into account the temperature of the heating water.

## Revendications

1. Pompe réglable dans sa puissance, en particulier pompe centrifuge, pour le système de chauffage d'un immeuble, à laquelle au moins deux étages de puissance peuvent être prédéfinis par l'intermédiaire d'un commutateur (6) accessible de l'extérieur, les étages de puissance pouvant être prédéfinis dans au moins deux modes de fonctionnement différents indépendants de la prédéfinition des étages de puissance,
**caractérisée par le fait qu'**aussi bien les étages de puissance qu'également les modes de fonctionnement (5, 7) peuvent être commutés par le commutateur unique.

2. Pompe selon la revendication 1,
**caractérisée par le fait qu'**un étage de puissance correspond à une hauteur de transport pouvant être prédéfinie.

3. Pompe selon la revendication 1,
**caractérisée par le fait que** le commutateur (6) est monté sur le carter d'électronique (4).

4. Pompe selon l'une des revendications précédentes,
**caractérisée par le fait que** le commutateur (6) est un bouton tournant qui peut être tourné sur deux gammes (5, 7), l'une des gammes (5) incluant des étages de puissance dans l'un des modes de fonctionnement et l'autre gamme (7) des étages de puissance dans l'autre mode de fonctionnement.

5. Pompe selon la revendication 4,
**caractérisée par le fait que** les gammes présentent des lois d'échelle (5, 7) différentes.

6. Pompe selon l'une des revendications précédentes,
**caractérisée par le fait que** le commutateur (6) est un bouton-poussoir tournant par lequel d'un côté les étages de puissance dans un mode de fonctionnement et, après action de poussée, les étages de puissance dans l'autre mode de fonctionnement peuvent être prédéfinis.

7. Pompe selon l'une des revendications précédentes,
**caractérisée par le fait que** l'un des modes est le fonctionnement normal et l'autre mode est un fonctionnement économique.

8. Pompe selon la revendication 7,
**caractérisée par le fait que** le réglage en fonctionnement économique, comme en particulier dans le cas d'un abaissement automatique de nuit et/ou d'un changement automatique été/hiver, prend en compte la température de l'eau de chauffage.
